# EUROPÄISCHE PATENTSCHRIFT

(11) **EP 1 196 701 B1**
(45) Veröffentlichungstag und Bekanntmachung des Hinweises auf die Patenterteilung: **28.05.2003**
(21) Anmeldenummer: 00947814.0
(22) Anmeldetag: 16.06.2000
(51) Int. Cl.: F16H 59/70

(54) **VORRICHTUNG ZUR POSITIONSERFASSUNG VON ZWEI ACHSBEWEGUNGEN**
DEVICE FOR DETECTING THE POSITION OF TWO AXIAL MOVEMENTS
DISPOSITIF DE DETECTION DE LA POSITION DE DEUX MOUVEMENTS AXIAUX

(30) Priorität: 29.06.1999 DE 19929632
(43) Veröffentlichungstag der Anmeldung: 17.04.2002
(73) Patentinhaber: ROBERT BOSCH GMBH, 70442 Stuttgart (DE)
(72) Erfinder: REICHL, Asta, D-70449 Stuttgart (DE); CADUFF, Urs, D-71282 Hemmingen (DE)
(86) Internationale Anmeldenummer: DE0001995
(87) Internationale Veröffentlichungsnummer: WO01002753

(56) Entgegenhaltungen:
- WO-A-91/11638
- WO-A-96/20363
- FR-A- 2 707 360
- GB-A- 2 014 672

## Beschreibung

### Stand der Technik

Die Erfindung geht aus von einer Vorrichtung zur Positionserfassung von zwei Achsbewegungen, insbesondere der Schaltstellung einer Getriebesteuerung nach der Gattung des Anspruchs 1. Aus der US PS 58 45 538 ist eine Vorrichtung zur Positionserfassung bekannt, bei der auf einer Welle ein Nocken befestigt ist. Auf dem Nocken befindet sich ein über die Oberfläche des Nockens herausragendes Bauteil, das auf einer Seite eine spiralförmige Kontur aufweist. Entlang dieser spiralförmigen Kontur gleitet der Fortsatz eines Tastsystems mit dessen Hilfe die Bewegung des Nockens von einem am Fortsatz angeordneten Sensor erfaßt wird und in ein elektrisches Ausgangssignal umgesetzt wird. Um ferner auch die radiale Bewegung der Welle zu bestimmen weist der Nocken einen Fortsatz auf, an dem ein Drehelement angreifen kann. Bei dieser Vorrichtung ist es aber nur möglich, eine kontinuierliche Bewegung zu erfassen. Dies bedeutet, daß die an der Welle angeordnete Getriebesteuerung eine Schaltung nur in einer vorgegebenen Reihenfolge ermöglicht. Es sind zum Beispiel keine Sprünge von geraden zu ungeraden Gängen möglich.

Aus der FR 2 707 360 A ist eine Vorrichtung gemäß dem Oberbegriff des Anspruchs 1 bekannt.

### Vorteile der Erfindung

Die erfindungsgemäße Vorrichtung zur Positionserfassung von zwei Achsbewegungen mit den kennzeichnenden Merkmalen des Anspruchs 1 hat demgegenüber den Vorteil, daß eine Trennung der geraden und der ungeraden Gänge mit Hilfe einer Neutralzone möglich ist. Der Abschnitt zwischen den einzelnen Gängen kann gleich oder individuell den Bedürfnissen angepaßt gestaltet werden. So ist es zum Beispiel möglich zwischen dem Rückwärtsgang und den übrigen Gängen einen abweichenden Schaltweg zu gestalten. Dadurch, daß die kugelförmig ausgebildete Metallspitze des Tasters auf der in Richtung ebenen Nockenoberfläche aufliegt, wird eine axiale Unempfindlichkeit der Vorrichtung erreicht. Die Übergänge zwischen den einzelnen Nockenbahnen, das heißt von den ungeraden Gängen zur Neutralzone und wiederum hin zu den geraden Gängen, sind als Rampen ausgebildet, so daß eine Positionserfassung ohne Prellen und sich daraus ergebenden Meßfehlern möglich ist. Die Meßvorrichtung ermöglicht die Verwendung von einfachen Auswerteschaltungen, um eine eindeutige Positionsaussage, das heißt welcher Gang gerade eingelegt ist, zu ermöglichen. Dies wird dadurch erreicht, daß von jedem Gang zuerst immer in die Neutralzone gefahren werden muß.

Durch die in den Unteransprüchen aufgeführten Maßnahmen sind vorteilhafte Weiterbildungen und Verbesserungen der im Anspruch 1 angegebenen Vorrichtung möglich.

### Zeichnung

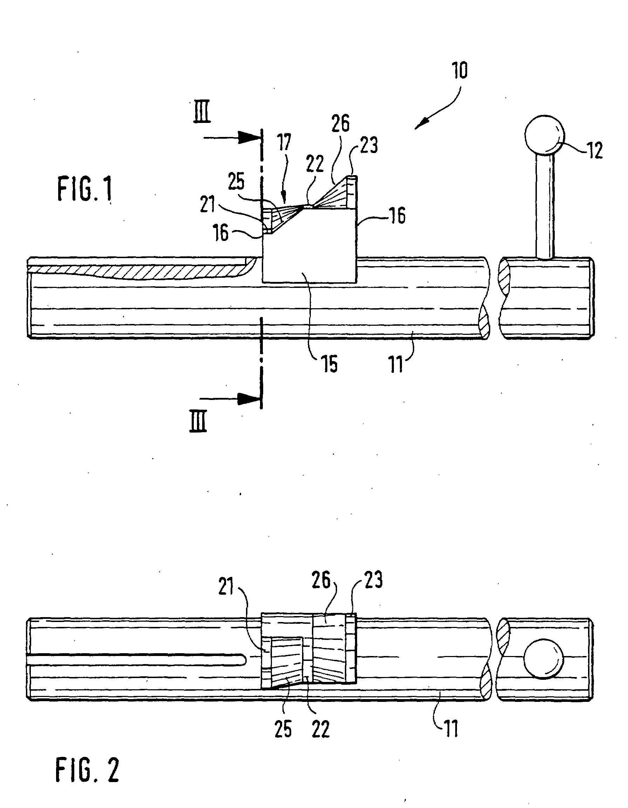

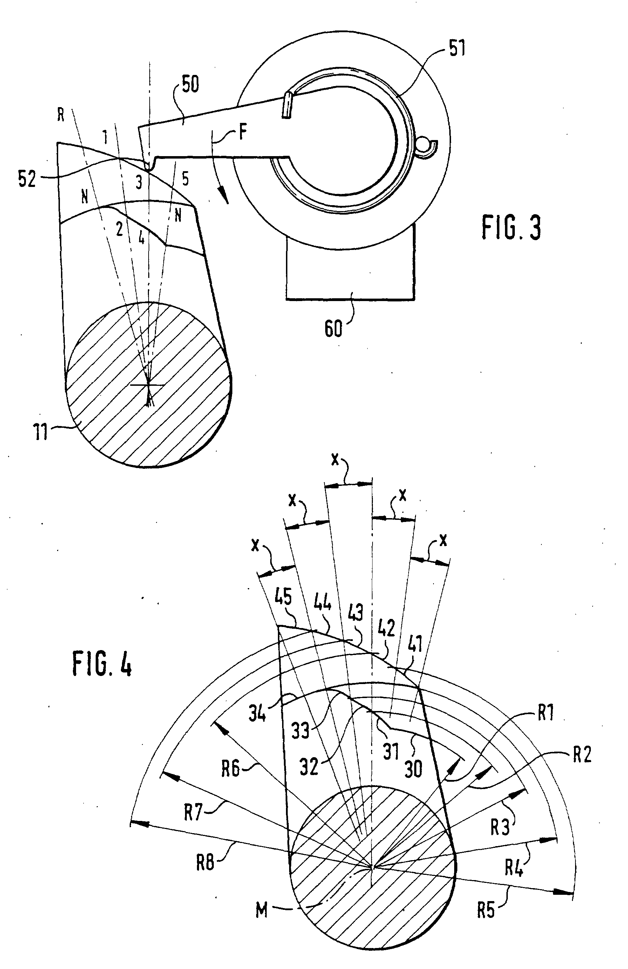

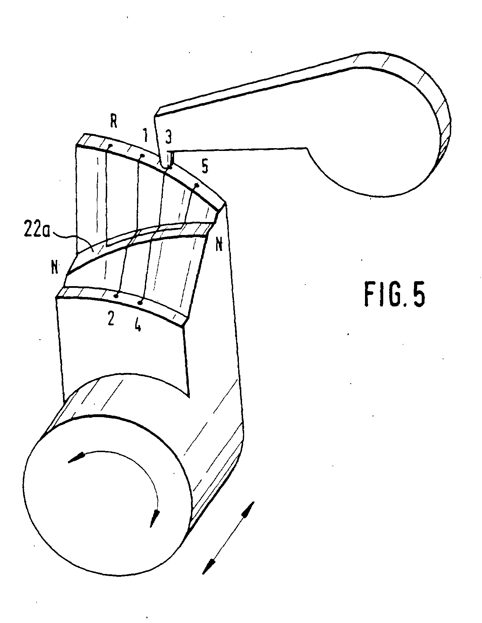

Ausführungsbeispiele der Erfindung sind in der Zeichnung dargestellt und in der nachfolgenden Beschreibung näher erläutert. Die Figur 1 zeigt eine Seitenansicht der Vorrichtung, Figur 2 eine Draufsicht auf die Vorrichtung zur Positionserfassung jeweils ohne angebauten Meßfühler, die Figur 3 zeigt einen Blick auf die Vorrichtung entsprechend III/III nach Figur 1 hier mit angebauten Meßfühler, Figur 4 einen Blick ebenfalls entsprechend III/III ohne Meßfühler und die Figur 5 eine perspektivische Darstellung einer Abwandlung des Ausführungsbeispiels.

### Beschreibung des Ausführungsbeispiels

In den Figuren ist mit 10 eine Vorrichtung zur Positionserfassung von zwei Achsbewegungen bezeichnet, die eine Welle 11 aufweist und Teil einer Schaltung einer Getriebesteuerung ist. Die Welle 11 ist direkt oder indirekt mit dem Schalthebel 12 der Getriebesteuerung verbunden. Mit Hilfe des Schalthebels 12 sind mehrere gerade Gänge beziehungsweise ungerade Gänge und ein Rückwärtsgang einstellbar. Auf der Welle 11 ist ein Nocken 15 befestigt, der in etwa einem Bereich von 180° der Welle 11 umfaßt. Beide Stirnflächen 16 des Nockens sind plan ausgebildet und verlaufen parallel zueinander. Auf der Mantelfläche 17 des Nockens 15 sind in Achsrichtung der Welle 11 gesehen hintereinander drei Nockenbahnen 21, 22, 23 vorhanden. Zwischen den Nockenbahnen 21, 22, 23 sind Rampen 25, 26 ausgebildet. Die Nockenbahn 22 ist in Achsrichtung der Welle 11 gesehen in der Mitte des Nockens 15 ausgebildet, während die beiden anderen Nockenbahnen 21, 23 jeweils parallel mit den Stirnseiten 16 abschließen. Im Ausführungsbeispiel sind die drei Nockenbahnen 21, 22, 23 in Achsrichtung gesehen jeweils gleich lang ausgebildet. Es wäre auch denkbar, daß die drei Nockenbahnen 21, 22, 23 unterschiedliche Längen aufweisen können. Den Nockenbahnen 21, 22, 23 sind jeweils verschiedene Schaltstellungen zugeordnet, die mit Hilfe des Schalthebels 12 eingestellt werden können. So ist der Nockenbahn 22 die Neutralstellung der Schaltung zugeordnet.

Hierzu hat sie eine über die gesamte Mantelfläche der Nockenbahn mit einem gleichmäßigen Radius, dessen Mittelpunkt M im Mittelpunkt der Welle 11 liegt verlaufende Mantelfläche. Den beiden übrigen Nockenbahnen 21, 23 sind zum Beispiel der Nockenbahn 21 die geraden Gänge, das heißt der zweite und der vierte Gang und der Nockenbahn 23 die ungeraden Gänge, das heißt der erste, der dritte und der fünfte Gang und auch der Rückwärtsgang zugeordnet. Gegebenfalls kann selbstverständlich die Anzahl der Gänge auch höher sein. Wie aus den Figuren 3 und 4 deutlich zu erkennen ist, besitzen die Nockenbahnen 21, 22, 23 jeweils unterschiedlichen radialen Abstand vom Mittelpunkt der Welle 11. So ist erkennbar, daß die drei Nockenbahnen 21, 22, 23 einen in Achsrichtung der Welle 1 gesehen gestafelten Abstand vom Mittelpunkt M der Welle 11 aufweisen, das heißt die Nockenbahn 21 hat den geringsten Abstand und die Nockenbahn 23 den größten Abstand.

Die einzelnen Schaltstellungen sind Punkten auf Kreisbahnen um den Mittelpunkt M der Welle 11 auf den drei Nockenbahnen 21, 22, 23 zugeordnet. So weist die Nockenbahn 21 einen Eingangsbereich 30 mit einem ersten Radius R1 auf. Am Ende dieses Bereichs 30 schließt sich ein Abschnitt 31 mit einer konstanten Steigung S an. Am Schnittpunkt dieses Abschnitts 31 mit einem zweiten Radius R2 befindet sich die Schaltstellung für den vierten Gang. Nun schließt sich ein Abschnitt 32 an, an dessen Ende, das heißt an dessen Schnittpunkt mit einem dritten Radius R3 sich die Schaltstellung für den zweiten Gang befindet. Der sich nun anschließende Bereich 33 hat wiederum die Steigung S und geht kontinuierlich in einen Bereich 34 über, der einen vierten Radius R4 aufweist. Dieser vierte Bereich 34 ist für die eigentliche Schaltung nicht unmittelbar notwendig.

Der vierte Radius R4 für den Abschnitt 34 entspricht auch dem Radius für die Neutralzone N, das heißt dem Verlauf der Mantellinie der zweiten Nockenbahn 22.

Die dritte Nockenbahn 23 weist nun wieder einen ersten Abschnitt 41 mit konstanter Steigung S auf. Am Ende dieses Abschnittes 41, das heißt am Schnittpunkt des Abschnitts 41 mit einem fünften Radius R5 befindet sich die Schaltstellung für den fünften Gang. Es schließen sich nun Abschnitte 42, 43, 44 und ein Endabschnitt 45 an. An den Übergängen zwischen den einzelnen Abschnitten 41 bis 45, das heißt an den jeweiligen Schnittpunkten mit den Radien R5, R6, R7 und R8 ist die Schaltstellung für den dritten, ersten und für den Rückwärtsgang. Die einzelnen Abschnitte 41 bis 45 weisen wieder eine kontinuierliche Steigung S auf.

Bei dem in den Figuren dargestellten Ausführungsbeispiel nimmt der Radius vom ersten Radius R1 bis zum achten Radius R8 kontinuierlich zu. Dies bedeutet, daß der Übergang von einem Gang zum anderen Gang kontinuierliche Größe aufweist. Selbstverständlich ist es auch möglich die Größe des Übergangs zwischen den einzelnen Gängen zu variieren, indem die Radien uneinheitlich zunehmen. So wäre es zum Beispiel denkbar, zwischen dem ersten Gang und dem Rückwärtsgang eine größere Radiuszunahme vorzusehen, um so den Rückwärtsgang deutlich von den übrigen Gängen abzugrenzen. Sinngemäß gilt obige Ausführung auch für die hier beim Ausführungbeispiel angegebene kontinuierliche Steigung S der Abschnitte 31 bis 33 beziehungsweise 41 bis 45. Auch sind diese Abschnitte beim Ausführungsbeispiel gleich lang, das heißt sie weisen einen gleich langen Winkelbereich x° auf. Auch wäre es hier denkbar den jeweiligen Abschnitten einen anderen oder jeweils unterschiedlichen Winkelbereich zuzuordnen, um so eine besondere Charakterisierung des sich einem Abschnitt anschließenden Gangs zuzuordnen.

Wie aus der Figur 3 nun ersichtlich ist wird ein Tasthebel 50 mit Hilfe eines Federelements 51 auf die Mantelfläche des Nockens 15 gedrückt. Hierzu weist der Tasthebel 50 eine kugelförmig ausgebildete Spitze 52 auf. Der Tasthebel 50 und die Spitze 52 können aus Metall bestehen. Mit Hilfe dieser kugelförmigen Spitze 52 ist es nun möglich, das oben beschriebene dreidimensionale Oberflächengebilde des Nockens 15 sowohl in Achsrichtung der Welle 11 als auch in radialer Richtung der Welle 11 kontinuierlich abzugreifen. Hierzu schließt sich an dem Tasthebel 50 ein in den Figuren nur schematisch dargestellter Sensor 60 an, der die Bewegung des Tasthebels 50 in ein elektrisches Ausgangssignal umwandelt. Hierzu bietet sich zum Beispiel ein magnetfeldempfindlicher Sensor, wie zum Beispiel ein Hallelement, ein magnetoresistives Element oder auch ein induktiver Sensor an.

Mit Hilfe des Federelements 51 wird die kugelförmige Spitze 52 des Tasthebel 50 auch während der Bewegung der Welle 11 auf die Mantelfläche des Nockens 15 gedrückt. Während des Schaltvorgangs mit Hilfe des Schalthebels 12 erfolgt nun sowohl eine axiale Bewegung der Welle 11 als auch eine Drehbewegung der Welle 11. Diese beiden Bewegungen werden ständig vom Tasthebel 50 mit seiner Spitze 52 nachverfolgt. Wird nun der Schalthebel 12 vom ersten in den zweiten Gang bewegt, so wird die Spitze 52 des Tasthebels 50 aus der Schaltposition für den ersten Gang, das heißt von der Nockenbahn 23 über die Rampe 26 in die Neutralstellung, das heißt auf die Nockenbahn 22 bewegt. Von dort wird die Spitze 52 über die sich anschließende Rampe 25 auf die Nockenbahn 21 geschoben und befindet sich nun in der Schaltposition für den zweiten Gang. Während dieser Bewegung erfolgt die oben angegebene Verschiebung in axialer und radialer Richtung. Wird nun vom zweiten in den dritten Gang geschaltet, so muß erneut die Neutralstellung N, das heißt die Nockenbahn 22 durchschritten werden. Somit sind alle Gänge eins bis fünf durch die Neutralstellung N das heißt durch die Nockenbahn 22 getrennt.

In der Figur 5 ist eine perspektivische Darstellung einer Abwandlung des Ausführungsbeispiels dargestellt, die nicht zur Erfindung gehört. Diese Abwandlung weist keinen Abschnitt 34 auf der Nockenbahn 21 auf. Ferner sind in der Figur 5 die oben beschriebenen Schaltwege zwischen den einzelnen Schaltpunkten und die jeweiligen Gänge eingezeichnet.

## Patentansprüche

1. Vorrichtung zur Positionserfassung von zwei Achsbewegungen einer Getriebesteuerung, wobei auf einer Welle (11) mehrere Nockenbahnen (21, 22, 23) ausgebildet sind, an denen ein Fortsatz (52) eines Tasthebels (50) entlang gleitet, wobei die Bewegung des Fortsatzes (52) mit Hilfe eines Sensor (60) in ein Ausgangssignal umgewandelt wird, wobei sich in Achsrichtung der Welle (11) gesehen zu beiden Seiten einer ersten Nockenbahn (22) mit kreisförmig um den Mittelpunkt (M) der Welle (11) verlaufender Oberfläche eine zweite (21) und eine dritte (23) Nockenbahn befindet, die zweite (21) und die dritte (23) Nockenbahn in Umfangsrichtung der Welle (11) gesehen hintereinander Abschnitte aufweisen, denen die Gänge der Getriebesteuerung zugeordnet sind, **dadurch gekennzeichnet daß** der Übergang zwischen den Nockenbahnen (21, 22, 23) als Rampe (25, 26) ausgebildet ist, und die Neutralstellung (N) der Getriebesteuerung der ersten Nockenbahn (22) zugeordnet ist.

2. Vorrichtung nach Anspruch 1, **dadurch gekennzeichnet, daß** die Nockenbahnen (21, 22, 23) in Achsrichtung der Welle (11) gesehen gleiche Länge aufweisen.

3. Vorrichtung nach Anspruch 1 oder 2, **dadurch gekennzeichnet, daß** die Nockenbahnen (21, 22, 23) jeweils mehrere Abschnitte (31, 32, 33) beziehungsweise (41 bis 45) aufweisen, deren Anfangs- und Endpunkt jeweils vom Mittelpunkt M der Welle (11) aus gesehen unterschiedliche Radien (R 1 bis R 8) aufweisen.

4. Vorrichtung nach einem der Ansprüche 1 bis 3, **dadurch gekennzeichnet, daß** die zweite Nockenbahn (21) einen kleiner Radius aufweist als die dritte Nockenbahn (23).

5. Vorrichtung nach einem der Ansprüche 1 bis 4, **dadurch gekennzeichnet, daß** die Abschnitte (41 bis 45) der dritten Nockenbahn (23) einen kleineren Winkelbereich als die Abschnitte (31, 32, 33) der zweiten Mockenbahn (21) umfassen.

6. Vorrichtung nach einem der Ansprüche 1 bis 5, **dadurch gekennzeichnet, daß** die zweite Nockenbahn (21) einen Abschnitt (34) aufweist, der den Radius der ersten Nockenbahn (22) hat.

7. Vorrichtung nach einem der Ansprüche 1 bis 6, **dadurch gekennzeichnet, daß** die drei Nockenbahnen (21, 22, 23) in Achsrichtung der Welle (11) gesehen mindestens teilweise zylinderförmig ausgebildet sind.

8. Vorrichtung nach einem der Ansprüche 1 bis 7, **dadurch gekennzeichnet, daß** der dritten Nockenbahn (23) die ungeraden Gänge und der Rückwärtsgang und daß der zweiten .Nockenbahn (21) die geraden Gänge der Getriebesteuerung zugeordnet sind.

9. Vorrichtung nach einem der Ansprüche 1 bis 8, **dadurch gekennzeichnet, daß** die Spitze (52) des Tasthebels (50) kugelförmig ausgebildet ist.

## Claims

1. Device for detecting the position of two axial movements of a transmission control, a shaft (11) having formed on it a plurality of cam tracks (21, 22, 23), on which an extension (52) of a tracer lever (50) slides along, the movement of the extension (52) being converted into an output signal with the aid of a sensor (60), and, as seen in the axial direction of the shaft (11), a second cam track (21) and a third cam track (23) being located on both sides of a first cam track (22) having a surface running circularly about the centre point (M) of the shaft (11), and the second cam track (21) and the third cam track (23) having one behind the other, as seen in the circumferential direction of the shaft (11), portions to which the gears of the transmission control are assigned, **characterized in that** the transition between the cam tracks (21, 22, 23) is designed as a ramp (25, 26), and the neutral position (N) of the transmission control is assigned to the first cam track (22).

2. Device according to Claim 1, **characterized in that** the cam tracks (21, 22, 23) are of equal length, as seen in the axial direction of the shaft (11).

3. Device according to Claim 1 or 2, **characterized in that** the cam tracks (21, 22, 23) have in each case a plurality of portions (31, 32, 33) or (41 to 45), the starting point and the end point of which in each case have different radii (R1 to R8), as seen from the centre point (M) of the shaft (11).

4. Device according to one of Claims 1 to 3, **characterized in that** the second cam track (21) has a smaller radius than the third cam track (23).

5. Device according to one of Claims 1 to 4, **characterized in that** the portions (41 to 45) of the third cam track (23) cover a smaller angular sector than the portions (31, 32, 33) of the second cam track (21).

6. Device according to one of Claims 1 to 5, **characterized in that** the second cam track (21) has a portion (34) which has the radius of the first cam track (22).

7. Device according to one of Claims 1 to 6, **characterized in that** the three cam tracks (21, 22, 23) are of at least partially cylindrical design, as seen in the axial direction of the shaft (11).

8. Device according to one of Claims 1 to 7, **characterized in that** the third cam track (23) is assigned the odd gears and reverse gear of a transmission control, and **in that** the second cam track (21) is assigned the even gears of the transmission control.

9. Device according to one of Claims 1 to 8, **characterized in that** the tip (52) of the tracer lever (50) is of spherical design.

## Revendications

1. Dispositif de détection de la position de deux mouvements axiaux d'une commande de boîte de vitesses selon lequel un arbre (11) comporte plusieurs chemins de came (21, 22, 23), le long desquels glisse un prolongement (52) d'un levier palpeur (50), le mouvement du prolongement (52) étant converti par un capteur (60) en un signal de sortie, et dans la direction axiale de l'arbre (11), des deux côtés d'un premier chemin de came (22) à surface circulaire par rapport au centre (M) de l'arbre (11), on a un second chemin de came (21) et un troisième chemin de came (23), le second chemin de came (21) et le troisième chemin de came (23) ayant des segments placés l'un derrière l'autre dans la direction périphérique de l'arbre (11), segments auxquels sont associés les rapports de la commande de boîte de vitesses,
**caractérisé en ce que**
le passage entre les chemins de came (21, 22, 23) est réalisé sous la forme d'une rampe (25, 26), et la position neutre (N) de la commande de boîte de vitesses est associée au premier chemin de came (22).

2. Dispositif selon la revendication 1,
**caractérisé en ce que**
les chemins de came (21, 22 et 23) ont la même longueur dans la direction axiale de l'arbre (11).

3. Dispositif selon les revendications 1 ou 2,
**caractérisé en ce que**
les chemins de came (21, 22 et 23) se composent de plusieurs segments (31, 32, 33) ou (41, 45) dont le début et la fin correspondent à des rayons (R1... R8) différents lorsqu'on regarde du centre (M) de l'arbre (11).

4. Dispositif selon l'une des revendications 1 à 3,
**caractérisé en ce que**
le second chemin de came (21) a un rayon plus petit que le troisième chemin de came (23).

5. Dispositif selon l'une des revendications 1 à 4,
**caractérisé en ce que**
les segments (41 - 45) du troisième chemin de came (23) correspondent à une plage angulaire plus petite que les segments (31, 32, 33) du second chemin de came (21).

6. Dispositif selon l'une des revendications 1 à 5,
**caractérisé en ce que**
le second chemin de came (21) comporte un segment (34) ayant le rayon du premier chemin de came (22).

7. Dispositif selon l'une des revendications 1 à 6,
**caractérisé en ce que**
les trois chemins de came (21, 22, 23) sont au moins partiellement de forme cylindrique lorsqu'on regarde dans la direction axiale de l'arbre (11).

8. Dispositif selon l'une des revendications 1 à 7,
**caractérisé en ce que**
le troisième chemin de came (23) correspond au rapport de vitesse impair et à la marche arrière et le second chemin de came (21) correspond au rapport de vitesse pair de la commande de boîte de vitesses.

9. Dispositif selon l'une des revendications 1 à 8,
**caractérisé en ce que**
la pointe (52) du levier palpeur (50) est d'une forme sphérique.
